# EUROPÄISCHE PATENTANMELDUNG

(11) **EP 4 847 548 A1**
(43) Veröffentlichungstag der Anmeldung: **02.12.2026**
(21) Anmeldenummer: 25179606.6
(22) Anmeldetag: 28.05.2025
(51) Int. Cl.: C08G 63/91, C09J 133/06, C09J 133/08, C09J 167/00, C08K 5/29, C08C 19/04, C08L 67/00

(54) **HÄRTBARE ZUSAMMENSETZUNGEN ENTHALTEND POLYBUTADIENE MIT KETOESTERGRUPPEN UND ALDIMINE**

(71) Anmelder: Sika Technology AG, 6340 Baar (CH)
(72) Erfinder: HÄBERLE, Hans, 8048 Zürich (CH); BURCKHARDT, Urs, 8048 Zürich (CH)
(74) Vertreter: Sika Patent Attorneys

(57) **Zusammenfassung**

Gegenstand der Erfindung ist die Verwendung eines Polybutadienpolymers **B** mit Ketoestergruppen der Formel (I) zum Elastifizieren einer härtbaren Zusammensetzung enthaltend Ketoestergruppen der Formel (I) und aromatische Aldimingruppen.

Die Verwendung ermöglicht härtbare Zusammensetzungen mit breit erhältlichen, preisgünstigen und toxikologisch vorteilhaften Bausteinen, wobei die härtbaren Zusammensetzungen wenig empfindlich gegenüber Feuchtigkeit sind und bei Umgebungsbedingungen schnell und zuverlässig zu Produkten von hoher Elastizität, hoher Festigkeit und guter Hydrolysebeständigkeit aushärten. Solche Produkte sind besonders geeignet als elastische Klebstoffe, elastische Dichtstoffe oder elastische Beschichtungen.

## Beschreibung

### Technisches Gebiet

Die Erfindung betrifft bei Raumtemperatur härtbare elastische Zusammensetzungen mit Ketoester- und Aldimingruppen.

### Stand der Technik

Bei Raumtemperatur härtbare Polymerzusammensetzungen mit elastischen Eigenschaften und ihre Verwendung als Beschichtungen, Klebstoffe oder Dichtstoffe sind bekannt. Typischerweise enthalten sie Reaktivgruppen wie Isocyanatgruppen oder Organosilangruppen. Diese Systeme weisen aber eine Reihe von Nachteilen auf. Isocyanate sind toxische und feuchteempfindliche Substanzen, deren Handhabung viel technisches Knowhow und Schutzmassnahmen erfordert, und Zusammensetzungen mit Organosilangruppen sind ebenfalls empfindlich gegen Feuchtigkeit, zudem werden bei der Aushärtung flüchtige Alkohole freigesetzt, wodurch unerwünschte Emissionen entstehen, und die ausgehärteten Produkte sind typischerweise eher spröde mit geringem Weiterreisswiderstand. Weiterhin bekannt sind härtbare Zusammensetzungen, welche als Reaktivgruppen Acetoacetat- und Imingruppen enthalten. Dabei entstehen aber zumeist harte, wenig dehnbare und kaum elastische Polymere. Zudem enthalten viele dieser Systeme grosse Mengen an flüchtigen organischen Lösemitteln, wodurch bei der Aushärtung unerwünschte Emissionen entstehen. US 5,288,804 beschreibt lösemittelbasierte Lacke auf der Basis von Acetoacetat-funktionellen Acrylatpolymeren, welche mittels aromatischen Polyaldiminen ausgehärtet werden. US 6,297,320 beschreibt lösemittelbasierte Korrosionsschutz-Lacke auf der Basis von Acetoacetat-funktionellen Acrylatpolymeren, welche mittels aliphatischen Ketiminen ausgehärtet werden.

US 2013/0224404 beschreibt die Aushärtung von Acetoacetat-funktionellen Polybutadienpolymeren mit Polyaminen zur Herstellung von Dichtstoffen für Isolierglas.

### Darstellung der Erfindung

Aufgabe der vorliegenden Erfindung ist es, eine bei Raumtemperatur härtbare Polymerzusammensetzung zur Verfügung zu stellen, welche elastische Produkte mit hoher Festigkeit und Dehnbarkeit ermöglicht und die Nachteile des Standes der Technik in Bezug auf toxische Inhaltsstoffe, Feuchteempfindlichkeit und Emissionen überwindet.

Überraschenderweise wird diese Aufgabe mit der in Anspruch 1 beschriebenen Verwendung eines Polybutadienpolymers **B** mit Ketoestergruppen der Formel (I) zum Elastifizieren einer härtbaren Zusammensetzung enthaltend Ketoester- und Aldimingruppen gelöst. Polybutadienpolymere sind sehr anspruchsvoll bei der Verwendung in härtbaren elastischen Zusammensetzungen. Ihr hydrophobes Rückgrat ermöglicht zwar interessante Eigenschaften wie gute Hydrolysebeständigkeit und niedrige Glasumwandlungstemperaturen (Tg), sie sind aber meist schwierig zum Vermischen mit weiteren Inhaltsstoffen der Zusammensetzung wie weiteren Polymeren, Härtern oder Weichmachern, wobei oft unbefriedigende mechanische Eigenschaften entstehen. Überraschenderweise ermöglichen das Mitverwenden eines Polybutadienpolymers **B** niedrigviskose Zusammensetzungen, welche bei Umgebungstemperaturen zuverlässig aushärten und überraschend elastisch sind. Insbesondere ermöglicht die Mitverwendung eines Polybutadienpolymers **B** in einer härtbaren Zusammensetzung enthaltend ein Rizinusöl-basiertes Polymer mit Ketoestergruppen der Formel (I) eine deutliche Elastifizierung der ausgehärteten Zusammensetzung bei immer noch hoher Zugfestigkeit und Weiterreissfestigkeit, ohne dabei die Aushärtungsgeschwindigkeit zu verlangsamen, ersichtlich bei den Beispielen in Tabelle 1. Dies ist besonders überraschend, würde man doch erwarten, dass durch die Elastifizierung die Aushärtung verlangsamt und die Festigkeit stark reduziert wird, wie das bei der Verwendung von Polyetherpolymeren anstelle des Polybutadienpolymers **B** auftritt, ersichtlich in den Beispielen in Tabelle 2. Als Mass für die Elastizität wird dabei das Verhältnis des Elastizitätsmoduls (E-Moduls) im tiefen Dehnungsbereich (bis 5 % Dehnung) zum E-Modul im höheren Dehnungsbereich (bis 50 % Dehnung) angeschaut, wobei ein Wert näher bei 1 eine erhöhte Elastizität bzw. einen zunehmend lineareren Verlauf der Zugspannungs-Dehnungskurve anzeigt.

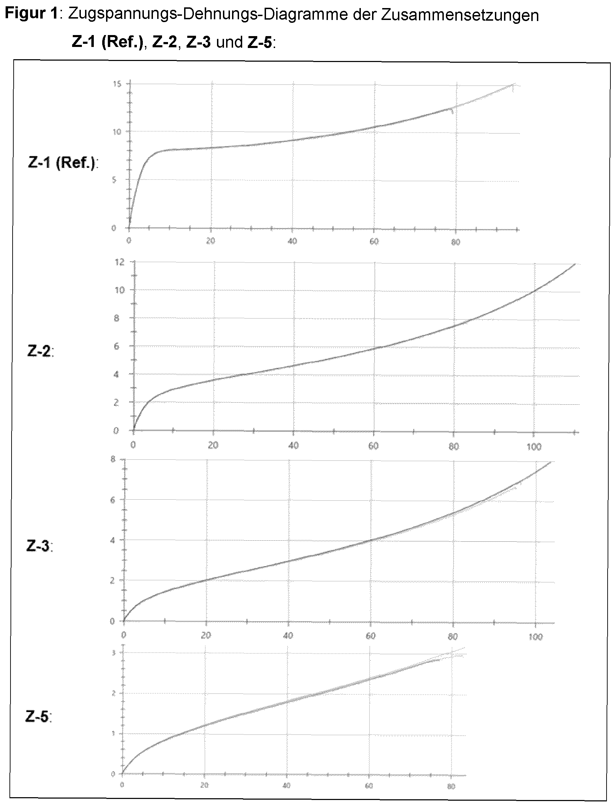

Die **Figur 1** zeigt die Zugspannungs-Dehnungs-Diagramme von ausgehärteten Zusammensetzungen, wobei bei steigendem Anteil an Polybutadienpolymer **B** der Kurvenverlauf zunehmend linear ist.

Die vorliegende Erfindung ermöglicht härtbare Zusammensetzungen mit gut verfügbaren, preisgünstigen und toxikologisch vorteilhaften Inhaltsstoffen, wobei die härtbaren Zusammensetzungen wenig empfindlich gegenüber Feuchtigkeit sind und bei Umgebungsbedingungen schnell und zuverlässig zu Produkten von hoher Elastizität, hoher Festigkeit und guter Hydrolysebeständigkeit aushärten. Solche Produkte sind besonders geeignet als elastische Klebstoffe, elastische Dichtstoffe oder elastische Beschichtungen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung eines Polybutadienpolymers **B** mit Ketoestergruppen der Formel (I) zum Elastifizieren einer härtbaren Zusammensetzung enthaltend Ketoestergruppen der Formel (I) und aromatische Aldimingruppen, 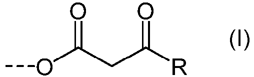 wobei R für einen einwertigen Kohlenwasserstoffrest mit 1 bis 6 C-Atomen steht.

Eine gestrichelte Linie in den Formeln in diesem Dokument stellt jeweils die Bindung zwischen einem Substituenten und dem zugehörigen Molekülrest dar.

Der Begriff "Elastifizieren" beschreibt die Erhöhung der Elastizität einer polymeren Zusammensetzung, gemessen an einem zunehmend linearen Kurvenverlauf der Zugspannungs-Dehnungskurve nach der Aushärtung.

Als "aromatische Aldimingruppe" wird eine Gruppierung der Formel --N-CHbezeichnet, deren Kohlenstoffatom direkt an einen aromatischen oder heteroaromatischen Ring gebunden ist und die selbst nicht Teil eines heteroaromatischen Ringsystems ist.

Mit "Poly" beginnende Substanznamen wie Polyamin oder Polyol bezeichnen Substanzen, die formal zwei oder mehr der in ihrem Namen vorkommenden funktionellen Gruppen pro Molekül enthalten.

Als "Molekulargewicht" wird die molare Masse (in Gramm pro Mol) eines Moleküls bezeichnet. Als "mittleres Molekulargewicht" wird das Zahlenmittel des Molekulargewichts (Mₙ) einer polydispersen Mischung von oligomeren oder polymeren Molekülen bezeichnet. Es wird mittels Gelpermeationschromatographie (GPC) gegen Polystyrol als Standard bestimmt.

Als "Equivalentgewicht" wird die Masse eines Moleküls oder einer Zusammensetzung pro Molequivalent einer funktionellen Gruppe bezeichnet (in Gramm pro Equivalent).

Als "lagerstabil" wird eine Zusammensetzung bezeichnet, wenn sie bei Raumtemperatur in einem geeigneten Gebinde während längerer Zeit, typischerweise während mindestens drei Monaten bis zu sechs Monaten und mehr, aufbewahrt werden kann, ohne dass sie sich in ihren Anwendungs- oder Gebrauchseigenschaften durch die Lagerung in einem für ihren Gebrauch relevanten Ausmass verändert. Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Bevorzugt hat das Polybutadienpolymer **B** ein mittleres Molekulargewicht Mₙ von 1'000 bis 6'000 g/mol, insbesondere 2'000 bis 4'000 g/mol.

Das Polybutadienpolymer **B** weist ein Polybutadien-Rückgrat auf.

Das Polybutadien-Rückgrat stammt insbesondere aus der radikalischen Polymerisation von 1,3-Butadien. Es enthält typischerweise mehrheitlich Strukturelemente der Formel 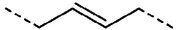 und gegebenenfalls zusätzlich Strukturelemente der Formel 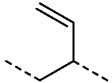 und/oder

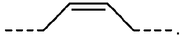

Das Polybutadienpolymer **B** hat bevorzugt eine mittlere Ketoester-Funktionalität von 2 bis 3, insbesondere 2.3 bis 2.7.

Bevorzugt hat das Polybutadienpolymer **B** ein Ketoester-Equivalentgewicht von 500 bis 2'000 g/mol, insbesondere 800 bis 1'600 g/mol.

Bevorzugt steht R in Formel (I) für einen Alkylrest mit 1 bis 6 C-Atomen oder für Phenyl, besonders bevorzugt für Methyl, Ethyl, Propyl, Isopropyl, Butyl oder Phenyl.

Am meisten bevorzugt steht R für Methyl und die Ketoestergruppen der Formel (I) sind somit Acetoacetatgruppen. Verbindungen mit Acetoacetatgruppen sind besonders einfach zugänglich und ermöglichen Zusammensetzungen mit besonders schneller Aushärtung.

Ein Polybutadienpolymer **B** mit Ketoestergruppen der Formel (I) wird bevorzugt erhalten aus der Umesterung von mindestens einem Polybutadienpolyol mit mindestens einem Ketoester der Formel R¹ 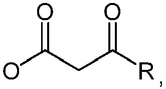 wobei R¹ für C₁₋₆ Alkyl steht und R die bereits genannten Bedeutungen aufweist. Bevorzugt steht R¹ für Ethyl oder tert-Butyl.

Bevorzugt erfolgt die Umesterung bei einer Temperatur von 50 bis 180 °C unter destillativer Entfernung des freigesetzten Alkohols R¹OH und gegebenenfalls Fragmentierungsprodukten davon, gegebenenfalls unter Vakuum und gegebenenfalls in Anwesenheit eines geeigneten Katalysators.

Ebenfalls möglich ist eine Herstellung, bei welcher das Polybutadienpolyol mit Diketen oder dem Addukt von Diketen mit Aceton (= 2,2,6-Trimethyl-4H-1,3-dioxin-4-on) umgesetzt wird, wobei im Fall des Aceton-Diketen-Addukts Aceton freigesetzt wird.

Ein geeignetes Polybutadienpolyol wird insbesondere erhalten durch Polymerisation von 1,3-Butadien und Anteilen an Allylalkohol oder durch Oxidation von geeigneten Polybutadienen.

Ein besonders geeignetes Polybutadienpolyol ist kommerziell erhältlich als Poly bd^{®} R45 HTLO (von Resin Solutions).

Das Polybutadienpolymer **B** ist typischerweise bei Raumtemperatur flüssig und niedrigviskos. Bevorzugt weist es eine Viskosität bei 20 °C von 3 bis 20 Pa·s auf, bestimmt mittels Kegel-Platten-Viskosimeter mit Kegeldurchmesser 25 mm, Kegelwinkel 1°, Kegelspitze-Platten-Abstand 0.05 mm und Scherrate 25 s⁻¹. Dies ermöglicht eine einfache Handhabung und eine gute Verarbeitbarkeit der härtbaren Zusammensetzung.

Die härtbare Zusammensetzung, zu deren Elastifizierung das Polybutadienpolymer **B** verwendet wird, enthält Ketoestergruppen der Formel (I) und aromatische Aldimingruppen.

Bevorzugt enthält die härtbare Zusammensetzung mindestens eine Verbindung mit mindestens zwei Ketoestergruppen der Formel (I), insbesondere Acetoacetatgruppen. Bevorzugt weist die Verbindung ein Ketoester-Equivalentgewicht von 114 bis 600 g/eq auf. Bevorzugt enthält die Verbindung zwei, drei oder vier Ketoestergruppen der Formel (I).

Dafür geeignet sind insbesondere die Acetoacetate von handelsüblichen Diolen, Triolen oder Polyolen, insbesondere ausgewählt aus 1,2-Propandiol, Dipropylenglykol (Isomerengemisch), Tripropylenglykol (Isomerengemisch), 1,3-Propandiol, 1,4-Butandiol, 1,2-Butandiol, 2-Methyl-1,3-propandiol, 1,5-Pentandiol, 1,2-Pentandiol, Neopentylglykol, 2-Methyl-1,4-butandiol, 1,6-Hexandiol, 3-Methyl-1,5-pentandiol, 1,8-Octandiol, 2-Ethyl-1,3-hexandiol, 1,10-Decandiol, 1,12-Dodecandiol, Polytetrahydrofurandiole, 1,3-Cyclohexandimethanol, 1,4-Cyclohexandimethanol, Isosorbid, 2,5-Bis(hydroxymethyl)tetrahydrofuran, 2,5(6)-Bis(hydroxymethyl)bicyclo[2.2.1]heptan, 3(4),8(9)-Bis(hydroxymethyl)tricyclo[5.2.1.0^{2,6}]decan, hydriertes Bisphenol F, hydriertes Bisphenol A, Glycerin, 1,1,1-Trimethylolethan, 1,1,1-Trimethylolpropan, Pentaerythrit, ethoxyliertem und insbesondere propoxyliertem Glycerin, ethoxyliertem und insbesondere propoxyliertem 1,1,1-Trimethylolpropan, Poly(oxy-1,2-propylen)diolen, Poly(oxy-1,2-propylen)triolen, Dimerfettsäure-basierten Polyesterpolyolen, Rizinusöl, Derivaten von Rizinusöl und hydroxylierten Pflanzenölen.

Davon bevorzugt sind die Acetoacetate von Glycerin, 1,1,1-Trimethylolpropan, propoxyliertem 1,1,1-Trimethylolpropan, Dimerfettsäure-basierten Polyesterpolyolen, Rizinusöl oder Derivaten von Rizinusöl.

Bevorzugt enthält die härtbare Zusammensetzung zusätzlich zum Polybutadienpolymer **B** mindestens ein Polymer **P** mit Ketoestergruppen der Formel (I) ausgewählt aus Polyesterpolymeren mit Ketoestergruppen der Formel (I), Polyacrylatpolymeren mit Ketoestergruppen der Formel (I) und Rizinusöl-basierten Polymeren mit Ketoestergruppen der Formel (I).

Bevorzugt hat das Polymer **P** ein mittleres Molekulargewicht Mₙ von 800 bis 5'000 g/mol, insbesondere 800 bis 3'000 g/mol, und ein Ketoester-Equivalentgewicht von 300 bis 2'500 g/eq, insbesondere 300 bis 1'500 g/eq.

Geeignet als Polyesterpolymer mit Ketoestergruppen der Formel (I) sind insbesondere die Acetoacetate von amorphen Polyesterpolyolen aus der Veresterung einer Dimerfettsäure oder Trimerfettsäure oder eines Dimerfettalkohols oder Trimerfettalkohols, sowie die Acetoacetate von amorphen, gesättigten, bei Raumtemperatur flüssigen Polyesterdiolen oder -triolen, insbesondere Polyesterdiolen aus der Umsetzung von Dicarbonsäuren wie insbesondere Bernsteinsäure, Glutarsäure, Adipinsäure, Pimelinsäure, Korksäure, Azelainsäure, Sebacinsäure oder Dodecandicarbonsäure, mit Alkoholen wie insbesondere 1,2-Ethandiol, Diethylenglykol, 1,2-Propandiol, 1,3-Propandiol, 2-Methyl-1,3-propandiol, Dipropylenglykol, 1,4-Butandiol, 1,5-Pentandiol, 3-Methyl-1,5-pentandiol, 1,6-Hexandiol, Neopentylglykol, 1,3-Cyclohexandimethanol, 1,4-Cyclohexandimethanol oder Isosorbid.

Geeignet als Polyacrylatpolymer mit Ketoestergruppen der Formel (I) sind insbesondere Acetoacetat-funktionelle Polyacrylatpolymere, die unter Mitverwendung von Acetoacetat-funktionellen (Meth)acrylatmonomeren wie beispielsweise 2-Acetoacetoxyethyl-methacrylat polymerisiert wurden.

Bevorzugt enthält die härtbare Zusammensetzung als Polymer **P** mindestens ein Rizinusöl-basiertes Polymer mit einem Ketoester-Equivalentgewicht von 300 bis 500 g/eq.

Bevorzugt sind die Acetoacetate von handelsüblichen Rizinusöl-basierten Polyolen wie insbesondere Setathane^{®} D 1145 oder Setathane^{®} D 1150 (beide von Allnex). Eine solche Verwendung ermöglicht ausgehärtete Produkte mit einer besonders attraktiven Kombination aus hoher Elastizität bei hoher Festigkeit, welche überraschenderweise ohne Einbussen bei der Aushärtegeschwindigkeit aushärten, insbesondere in Bezug auf die Zeit bis zum Gelieren.

Bevorzugt liegt das Gewichtsverhältnis zwischen dem Polybutadienpolymer **B** und dem Polymer **P** in der härtbaren Zusammensetzung im Bereich von 1/99 bis 60/40, bevorzugt 5/95 bis 50/50, insbesondere 10/90 bis 40/60. Dies ermöglicht ausgehärtete Produkte mit hoher Elastizität bei hoher Festigkeit.

Die härtbare Zusammensetzung, zu deren Elastifizierung das Polybutadienpolymer **B** verwendet wird, enthält Ketoestergruppen der Formel (I) und aromatische Aldimingruppen.

Bevorzugt enthält die härtbare Zusammensetzung mindestens ein Aldimin **L** mit mindestens zwei Aldimingruppen der Formel (II), 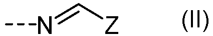 wobei Z für einen aromatischen oder heteroaromatischen fünf- oder sechsgliedrigen Ring steht, der gegebenenfalls substituiert und/oder anelliert ist und insgesamt 4 bis 25 C-Atome umfasst.

Insbesondere enthält das Aldimin **L** zwei oder drei Aldimingruppen der Formel (II).

Bevorzugt steht Z für einen Phenylrest, einen Naphthylrest, einen Furylrest, einen Pyridinrest, einen Pyrrolrest, einen Indolrest oder einen Thiophenrest, insbesondere für einen Phenylrest, Naphthylrest oder Furylrest, wobei diese Reste gegebenenfalls substituiert sind, insbesondere mit Alkyl- oder Alkoxy- oder Nitro- oder Estergruppen.

Insbesondere ist Z ausgewählt aus der Liste bestehend aus Phenyl, 2-Methylphenyl, 3-Methylphenyl, 4-Methylphenyl, 4-Ethylphenyl, 4-Isopropylphenyl, 4-Isobutylphenyl, 4-C₁₀₋₁₄-Alkylphenyl, 2,5-Dimethylphenyl, 2-Methoxyphenyl, 3-Methoxyphenyl, 4-Methoxyphenyl, 2-Ethoxyphenyl, 3-Ethoxyphenyl, 4-Ethoxyphenyl, 4-Propoxyphenyl, 4-Isopropoxyphenyl, 4-Butoxyphenyl, 4-Pentoxyphenyl, 4-Decyloxyphenyl, 4-Dodecyloxyphenyl, 2,3-Dimethoxyphenyl, 2,4-Dimethoxyphenyl, 2,5-Dimethoxyphenyl, 3,4-Dimethoxyphenyl, 3,5-Dimethoxyphenyl, 2,4,6-Trimethylphenyl, 2,4,5-Trimethoxyphenyl, 2,4,6-Trimethoxyphenyl, 3,4,5-Trimethoxyphenyl, 4-Methoxycarbonylphenyl, 4-Ethoxycarbonylphenyl, 3-Nitrophenyl, 1-Naphthyl, 2-Naphthyl, 2-Furyl und 5-Methyl-2-furyl.

Davon bevorzugt ist Phenyl, 4-Methylphenyl, 4-Ethylphenyl, 4-Isopropylphenyl, 4-Isobutylphenyl, 2-Furyl oder 5-Methyl-2-furyl.

Besonders bevorzugt steht Z für Phenyl oder 4-Methylphenyl. Solche Aldimingruppen der Formel (II) sind abgeleitet von Benzaldehyd bzw. 4-Tolualdehyd.

Bevorzugt hat das Aldimin **L** ein Aldimin-Equivalentgewicht von 110 bis 350 g/eq.

Bevorzugt als Aldimin **L** sind Umsetzungsprodukte von handelsüblichen primären Polyaminen mit mindestens einem aromatischen oder heteroaromatischen Aldehyd unter Freisetzung und Entfernung von Wasser.

Bevorzugt sind aliphatische oder cycloaliphatische primäre Polyamine, insbesondere ausgewählt aus der Liste bestehend aus 1,2-Ethandiamin, 1,2-Propandiamin, 1,3-Propandiamin, 1,4-Butandiamin, 1,5-Pentandiamin, 2,2-Dimethyl-1,3-propandiamin, 1,3-Pentandiamin (DAMP), 1,6-Hexandiamin, 1,5-Diamino-2-methylpentan (MPMD), 1,7-Heptandiamin, 1,8-Octandiamin, 2,5-Dimethyl-1,6-hexandiamin, 1,9-Nonandiamin, 2,2(4),4-Trimethyl-1,6-hexandiamin (TMD), 1,10-Decandiamin, 1,11-Undecandiamin, 2-Butyl-2-ethyl-1,5-pentandiamin (C11-Neodiamin), 1,12-Dodecandiamin, 1,2-Diaminocyclohexan, 1,3-Diaminocyclohexan, 1,4-Diaminocyclohexan, 1,3-Bis(aminomethyl)cyclohexan, 1,4-Bis(aminomethyl)cyclohexan, 1,3-Bis(aminomethyl)benzol (MXDA), Isophorondiamin (IPDA), 2(4)-Methyl-1,3-diaminocyclohexan, Bis(4-aminocyclohexyl)methan, 2,5(6)-Bis(aminomethyl)bicyclo[2.2.1]heptan (NBDA), 3(4),8(9)-Bis(aminomethyl)tricyclo[5.2.1.0^{2,6}]-decan (TCD-Diamin), 4,9-Dioxadodecan-1,12-diamin, 4,7,10-Trioxatridecan-1,13-diamin, Polyoxypropylendiaminen mit einem mittleren Molekulargewicht Mₙ von 200 bis 500 g/mol und Polyoxypropylentriaminen mit einem mittleren Molekulargewicht Mₙ von 300 bis 500 g/mol.

Bevorzugte Polyoxypropylendi- oder -triamine sind Jeffamine^{®} D-230, Jeffamine^{®} D-400 oder Jeffamine^{®} T-403 (alle von Huntsman), sowie entsprechende Typen von BASF oder Nitroil.

Als aromatischer oder heteroaromatischer Aldehyd bevorzugt sind Benzaldehyd, 2-Tolualdehyd, 3-Tolualdehyd, 4-Tolualdehyd, 4-Ethylbenzaldehyd, 4-Isopropylbenzaldehyd, 4-Isobutylbenzaldehyd, 4-C₁₀₋₁₄-Alkylbenzaldehyd, Salicylaldehyd, alkoxylierter Salicylaldehyd wie insbesondere 2-(2-Hydroxyethoxy)benzaldehyd, 3-Hydroxybenzaldehyd, 4-Hydroxybenzaldehyd, 2,5-Dimethylbenzaldehyd, 2-Methoxybenzaldehyd, 3-Methoxybenzaldehyd, 4-Methoxybenzaldehyd, 2-Ethoxybenzaldehyd, 3-Ethoxybenzaldehyd, 4-Ethoxybenzaldehyd, 4-Propoxybenzaldehyd, 4-Isopropoxybenzaldehyd, 4-Butoxybenzaldehyd, 4-Pentoxybenzaldehyd, 4-Decyloxybenzaldehyd, 4-Dodecyloxybenzaldehyd, 2,3-Dimethoxybenzaldehyd, 2,4-Dimethoxybenzaldehyd, 2,5-Dimethoxybenzaldehyd, 3,4-Dimethoxybenzaldehyd, 3,5-Dimethoxybenzaldehyd, 4-Hydroxy-3-methoxybenzaldehyd (Vanillin), 2,4,6-Trimethylbenzaldehyd, 2,4,5-Trimethoxybenzaldehyd, 2,4,6-Trimethoxybenzaldehyd, 3,4,5-Trimethoxybenzaldehyd, 4-Formylbenzoesäureester, insbesondere 4-Formylbenzoesäuremethylester oder 4-Formylbenzoesäureethylester, 3-Nitrobenzaldehyd, 1-Naphthaldehyd, 2-Naphthaldehyd, Furfural, 5-Methylfurfural oder 5-Hydroxymethylfurfural.

Besonders bevorzugt sind Benzaldehyd, die Tolualdehyde, 4-Ethylbenzaldehyd, 4-Isopropylbenzaldehyd, 4-Isobutylbenzaldehyd, Furfural, 5-Methylfurfural oder 5-Hydroxymethylfurfural, insbesondere Benzaldehyd, 4-Tolualdehyd, 4-Isopropylbenzaldehyd, Furfural oder 5-Methylfurfural.

Am meisten bevorzugt sind Benzaldehyd und 4-Tolualdehyd.

Bevorzugt ist das Aldimine **L** ausgewählt aus der Liste bestehend aus N,N'-Dibenzyliden-1,5-pentandiamin, N,N'-Dibenzyliden-1,6-hexandiamin, N,N'-Dibenzyliden-2-methyl-1,5-pentandiamin, N,N'-Dibenzyliden-2,2(4),4-trimethyl-1,6-hexandiamin, N,N'-Dibenzylidenpolyoxypropylendiaminen mit mittlerem Molekulargewicht Mₙ von 350 bis 750 g/mol, und entsprechende Verbindungen abgeleitet von 4-Tolualdehyd, 4-Isopropylbenzaldehyd, Furfural oder 5-Methylfurfural anstelle von Benzaldehyd.

Bevorzugt liegt das Verhältnis der Anzahl Ketoestergruppen der Formel (I) zur Anzahl aromatische Aldimingruppen bei der beschriebenen Verwendung im Bereich von 1 bis 4, besonders bevorzugt 1.5 bis 3.5, insbesondere 2 bis 3. Dies ermöglicht eine besonders attraktive Kombination aus schneller Aushärtung, hoher Festigkeit und hoher Dehnbarkeit.

Die beschriebene Verwendung ermöglicht härtbare Zusammensetzungen mit schneller Aushärtung und besonders hoher Elastizität, wobei die Mitverwendung des Polybutadienpolymers **B** in der härtbaren Zusammensetzung neben einer hohen Dehnbarkeit der ausgehärteten Zusammensetzung insbesondere einen vermehrt linearen Verlauf der Zugspannungs-Dehnungskurve bewirkt. Dies heisst insbesondere auch, dass das Elastizitätsmodul (E-Modul) im niedrigen Dehnungsbereich wie insbesondere bis 5 % Dehnung nicht allzu viel höher ist das E-Modul im höheren Dehnungsbereich bis 50 % Dehnung. Ein Mass für die Elastizität ist somit das Verhältnis zwischen dem E-Modul bis 5 % Dehnung und dem E-Modul bis 50 % Dehnung, wobei ein Wert näher bei 1 eine höhere Elastizität bedeutet. Insbesondere ist dieses Verhältnis bei Verwendung des Polybutadienpolymers **B** höchstens halb so gross verglichen mit einer entsprechenden Zusammensetzung ohne Polybutadienpolymer **B.**

Bevorzugt weist die ausgehärtete Zusammensetzung aus der beschriebenen Verwendung ein Verhältnis zwischen dem E-Modul bei 0.5 bis 5 % Dehnung und dem E-Modul bei 0.5 bis 50 % Dehnung, bestimmt gemäss DIN EN 53504 an hantelförmigen Prüfkörpern (Länge 75 mm, Steglänge 30 mm, Stegbreite 4 mm, Dicke 2 mm) mit einer Zuggeschwindigkeit von 200 mm/min, im Bereich von 1 bis 10, insbesondere 1.5 bis 7, auf.

Ein weiterer Gegenstand der Erfindung ist die härtbare Zusammensetzung, erhalten aus der beschriebenen Verwendung.

Die erhaltene härtbare Zusammensetzung enthält insbesondere mindestens ein Polybutadienpolymer **B** mit Ketoestergruppen der Formel (I), mindestens eine weitere Verbindung mit Ketoestergruppen der Formel (I) und mindestens eine Verbindung mit aromatischen Aldimingruppen.

Bevorzugt enthält die härtbare Zusammensetzung mindestens ein Polybutadienpolymer **B** mit Ketoestergruppen der Formel (I), mindestens ein Polymer **P** mit Ketoestergruppen der Formel (I) ausgewählt aus Polyesterpolymeren mit Ketoestergruppen der Formel (I), Polyacrylatpolymeren mit Ketoestergruppen der Formel (I) und Rizinusöl-basierten Polymeren mit Ketoestergruppen der Formel (I), insbesondere ein Rizinusöl-basiertes Polymer **P** mit Ketoestergruppen der Formel (I), und mindestens ein Aldimin **L** mit mindestens zwei Aldimingruppen der Formel (II), wie vorgängig beschrieben.

Dabei liegt das Gewichtsverhältnis zwischen dem Polybutadienpolymer **B** und dem Polymer **P** bevorzugt im Bereich von 1/99 bis 60/40, besonders bevorzugt 5/95 bis 50/50, insbesondere 10/90 bis 40/60.

Dabei liegt das Verhältnis der Anzahl Ketoestergruppen der Formel (I) zur Anzahl aromatische Aldimingruppen im Bereich von 1 bis 4, besonders bevorzugt 1.5 bis 3.5, insbesondere 2 bis 3.

Die härtbare Zusammensetzung kann zusätzlich weitere Bestandteile enthalten, insbesondere
- Füllstoffe, insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, industriell hergestellte Russe, Graphit, gemahlene Füllstoffe aus landwirtschaftlichen Quellen wie insbesondere Olivenkernmehl oder Nussschalenmehl, Metall-Pulver, beispielsweise von Aluminium, Kupfer, Eisen, Silber oder Stahl, PVC-Pulver oder organische oder anorganische Hohlkugeln,
- Beschleuniger, insbesondere eine Carbonsäure wie Milchsäure, Lävulinsäure, Heptansäure, Octansäure, Nonansäure, Decansäure, Undecansäure, Laurinsäure, Stearinsäure, Isostearinsäure, Benzoesäure oder 4-Aminobenzoesäure,
- Fasern, insbesondere Glasfasern, Kohlefasern, Metallfasern, Keramikfasern, Hanffasern, Zellulosefasern oder Kunststofffasern wie Polyamidfasern, Polyesterfasern, Polyethylenfasern oder Polypropylenfasern,
- Nanofüllstoffe oder Nanofasern wie Graphen oder Carbon Nanotubes,
- Farbstoffe,
- Pigmente, insbesondere Titandioxid, Chromoxid, Eisenoxide oder organische Pigmente,
- Weichmacher, insbesondere Phthalate, insbesondere Diisononylphthalat (DINP), Diisodecylphthalat (DIDP) oder Di(2-propylheptyl)phthalat (DPHP), hydrierte Phthalate, insbesondere Diisononyl-1,2-cyclohexandicarboxylat (DINCH), Terephthalate, insbesondere Bis(2-ethylhexyl)terephthalat oder Diisononylterephthalat (DINT), hydrierte Terephthalate, insbesondere Bis(2-ethylhexyl)-1,4-cyclohexandicarboxylat oder Diisononyl-1,4-cyclohexandicarboxylat, Isophthalate, Trimellitate, Adipate, insbesondere Dioctyladipat (DOA), Azelate, Sebacate, Citrate, Benzoate, Glycolether, Glycolester, Weichmacher mit Polyetherstruktur, insbesondere Poly(oxy-1,2-propylen)-monole, -diole oder -triole, gegebenenfalls mit blockierten Hydroxylgruppen, insbesondere in der Form von Acetylgruppen, sowie organische Sulfonate oder Phosphate, insbesondere Diphenylkresylphosphat (DPK) oder Tris-2-ethyl-hexylphosphat (TOF), Polybutene, Polyisobutene, Kohlenwasserstoffharze oder von natürlichen Fetten oder Ölen abgeleitete Weichmacher, insbesondere epoxidiertes Soja- oder Leinöl oder Rapsölmethylester, wobei Phthalate, hydrierte Phthalate, Adipate oder Weichmacher mit Polyetherstruktur bevorzugt sind,
- Verdünner wie insbesondere Benzylalkohol, 2-Phenoxyethanol, 2-Benzyloxyethanol, phenolgruppenhaltige aromatische Kohlenwasserstoffharze, Diisopropylnaphthalin, Isopropylbiphenyle oder hochsiedende aliphatische Kohlenwasserstoffe,
- Lösemittel,
- Rheologie-Modifizierer, insbesondere Harnstoffverbindungen, Schichtsilikate wie Bentonite, Derivate von natürlich vorkommenden Ölen wie Rizinusöl, hydriertes Rizinusöl, Polyamide, Polyurethane, pyrogene Kieselsäuren oder hydrophob modifizierte Polyoxyethylene,
- Haftvermittler, insbesondere Titanate oder Organoalkoxysilane wie Aminosilane, Mercaptosilane, Epoxysilane, (Meth)acrylsilane, Carbamatosilane, Alkylsilane, S-(Alkylcarbonyl)mercaptosilane oder oligomere Formen dieser Silane,
- flammhemmende Substanzen, insbesondere die bereits genannten Füllstoffe Aluminiumhydroxid oder Magnesiumhydroxid, organische Phosphorsäureester, Ammoniumpolyphosphate, expandierender Graphit, Melaminverbindungen, Borverbindungen oder Antimonverbindungen,
- oberflächenaktive Additive, insbesondere Netzmittel, Verlaufmittel, Entschäumer oder Entlüfter,
- Stabilisatoren gegen Oxidation, Wärme, Licht oder UV-Strahlung oder Biozide, sowie weitere üblicherweise in härtbaren Zusammensetzungen eingesetzte Substanzen.

Bevorzugt enthält die härtbare Zusammensetzung mindestens einen weiteren Bestandteil ausgewählt aus Füllstoffen, Pigmenten, Weichmachern, Verdünnern und oberflächenaktiven Additiven.

Die härtbare Zusammensetzung enthält bezogen auf die gesamte Zusammensetzung bevorzugt weniger als 10 Gewichts-%, besonders bevorzugt weniger als 5 Gewichts-%, insbesondere weniger als 1 Gewichts-%, flüchtige organische Lösemittel mit einem Siedepunkt bei Normaldruck von weniger als 250 °C. Eine solche Zusammensetzung verursacht besonders wenig Emissionen.

Die härtbare Zusammensetzung ist bevorzugt nicht wasserbasiert, das heisst sie liegt weder als Lösung noch als Emulsion oder Dispersion in Wasser vor. Sie ist bevorzugt weitgehend frei von Wasser oder enthält nur einen geringen Gehalt an Wasser. Eine solche Zusammensetzung härtet unabhängig von der Umgebungsfeuchte schnell aus, kann in dicken Schichten und/oder zwischen wasserdichten Substraten eingesetzt werden und zeigt kaum Schwund bei der Aushärtung. Bevorzugt enthält die härtbare Zusammensetzung weniger als 10 Gewichts-%, bevorzugt weniger als 5 Gewichts-%, insbesondere weniger als 2 Gewichts-%, Wasser bezogen auf die gesamte Zusammensetzung.

Bevorzugt umfasst die härtbare Zusammensetzung eine Komponente **K1** und eine Komponente **K2,** welche voneinander getrennt hergestellt und verpackt sind, wobei Verbindungen mit Ketoestergruppen der Formel (I) Bestandteil der Komponente **K1** und Verbindungen mit aromatischen Aldimingruppen Bestandteil der Komponente **K2** sind.

Weitere Inhaltsstoffe der Zusammensetzung können als Bestandteil der Komponente **K1** und/oder der Komponente **K2** vorhanden sein, wobei mit Ketoestergruppen der Formel (I) reaktive Bestandteile bevorzugt als Bestandteil der Komponente **K2** vorliegen, und mit aromatischen Aldimingruppen reaktive Bestandteile bevorzugt als Bestandteil der Komponente **K1** vorliegen.

Die Komponenten **K1** und **K2** werden getrennt voneinander hergestellt und aufbewahrt. Zur Herstellung werden die Inhaltsstoffe der jeweiligen Komponente miteinander vermischt, so dass eine makroskopisch homogene Masse entsteht.

Die Komponenten **K1** und **K2** werden in Bezug auf ihre Konsistenz bevorzugt so eingestellt, dass sie bei Umgebungsbedingungen mit einfachen Verfahren gut, d.h. möglichst schnell und vollständig, miteinander vermischt werden können. Bevorzugt sind die beiden Komponenten flüssig oder pastös.

Jede der beiden Komponenten ist in einer geeigneten Verpackung für sich allein lagerstabil. Geeignete Gebinde sind insbesondere Fässer, Container, Hobbocks, Eimer, Kanister, Dosen, Beutel, Schlauchbeutel, Kartuschen oder Tuben.

Zur Anwendung der härtbaren Zusammensetzung werden die Komponenten kurz vor oder während der Applikation miteinander vermischt. Das Mischungsverhältnis wird dabei bevorzugt so gewählt, dass das Verhältnis der Anzahl Ketoestergruppen der Formel (I) zur Anzahl aromatische Aldimingruppen im beschriebenen Bereich liegt. In Gewichtsteilen liegt das Mischungsverhältnis zwischen der Komponente **K1** und der Komponente **K2** typischerweise bei etwa 100:1 bis 1:5, insbesondere 50:1 bis 1:2.

Werden die Komponenten vor der Applikation miteinander vermischt, so muss darauf geachtet werden, dass zwischen dem Vermischen der Komponenten und der Applikation nicht zu viel Zeit vergeht, da es sonst durch die einsetzende Reaktion und dem damit verbundenen Anstieg der Viskosität zu Störungen wie beispielsweise einem ungenügenden Applizierbarkeit, optischen Defekten oder einer verlangsamten oder unvollständigen Haftung zum Substrat kommen kann. Insbesondere soll die Offenzeit der Zusammensetzung während der Applikation nicht überschritten werden.

Als "Offenzeit" wird die Zeitspanne zwischen dem Vermischen der Komponenten und dem Ende eines für die Verarbeitung geeigneten Zustands der Zusammensetzung bezeichnet.

Das Vermischen erfolgt bevorzugt bei Umgebungstemperatur, bevorzugt bei einer Temperatur im Bereich von -5 bis 50 °C, bevorzugt 0 bis 40 °C, insbesondere 5 bis 35 °C.

Mit dem Vermischen der Inhaltsstoffe bzw. der Komponenten beginnt die Zusammensetzung durch die einsetzende chemische Reaktion auszuhärten. Dabei reagieren Verbindungen mit Ketoestergruppen der Formel (I) mit aromatischen Aldimingruppen. Es kann vermutet werden, dass typischerweise zwei Ketoestergruppen mit einer Aldimingruppe unter Freisetzung von Wasser zu einer cyclischen Struktureinheit reagieren. Dabei wird kein Aldehyd freigesetzt. Auch Aldimine abgeleitet von Benzaldehyd verursachen somit bei der Aushärtung keinen Geruch nach Benzaldehyd, da bei der Aushärtung kein Benzaldehyd freigesetzt wird.

Die Aushärtung erfolgt bevorzugt bei Umgebungstemperatur, bevorzugt bei einer Temperatur im Bereich von -5 bis 50°C, insbesondere 0 bis 40°C.

Die Aushärtegeschwindigkeit wird in Bezug auf die Zeit bis zum Gelieren der vermischten Zusammensetzung durch die Anwesenheit des elastifizierenden Polybutadienbpolymers **B** nicht verlängert, was besonders überraschend und sehr vorteilhaft ist, da dadurch ein Begehen oder Weiterbearbeiten der applizierten Zusammensetzung nicht verzögert wird.

Ein weiterer Gegenstand der Erfindung ist die ausgehärtete Zusammensetzung, erhalten aus der beschriebenen Verwendung oder der beschriebenen härtbaren Zusammensetzung nach dem Vermischen der Inhaltsstoffe oder Komponenten und anschliessendem Aushärten durch chemische Reaktion.

Die ausgehärtete Zusammensetzung verfügt über eine besonders hohe Elastizität bei hoher Festigkeit und über eine gute Hydrolysestabilität.

Bevorzugt hat die ausgehärtete Zusammensetzung eine Bruchdehnung von mindestens 50 %, bevorzugt mindestens 75 %, insbesondere mindestens 90 %, bestimmt gemäss DIN EN 53504 an hantelförmigen Prüfkörpern (Länge 75 mm, Steglänge 30 mm, Stegbreite 4 mm, Dicke 2 mm) mit einer Zuggeschwindigkeit von 200 mm/min.

Weiterhin bevorzugt hat die ausgehärtete Zusammensetzung eine Zugfestigkeit von mindestens 3 MPa, bevorzugt mindestens 5 MPa, insbesondere mindestens 7 MPa, bestimmt gemäss DIN EN 53504 an hantelförmigen Prüfkörpern (Länge 75 mm, Steglänge 30 mm, Stegbreite 4 mm, Dicke 2 mm) mit einer Zuggeschwindigkeit von 200 mm/min.

Weiterhin bevorzugt hat die ausgehärtete Zusammensetzung einen Weiterreisswiderstand von mindestens 5 N/mm, bevorzugt mindestens 10 N/mm, insbesondere mindestens 15 N/mm, bestimmt gemäss DIN ISO 34-1, Verfahren B (winkelförmiger Prüfkörper) mit einer Prüfkörperdicke von 2 mm bei einer Zuggeschwindigkeit von 500 mm/min.

Weiterhin bevorzugt weist die ausgehärtete Zusammensetzung eine gute Hydrolysebeständigkeit auf, wobei die Werte für die Zugfestigkeit und für die Bruchdehnung nach einer Lagerung der ausgehärteten Prüfkörper während 7 Tagen bei 70 °C und 100 % relative Luftfeuchtigkeit und nachfolgender Lagerung während 7 Tagen im Normklima mindestens 80 %, bevorzugt mindestens 85 %, des Ausgangswerts betragen.

Besonders bevorzugt liegt das Verhältnis zwischen dem E-Modul bei 0.5 bis 5 % Dehnung und dem E-Modul bei 0.5 bis 50 % Dehnung, bestimmt gemäss DIN EN 53504 an hantelförmigen Prüfkörpern (Länge 75 mm, Steglänge 30 mm, Stegbreite 4 mm, Dicke 2 mm) mit einer Zuggeschwindigkeit von 200 mm/min, im Bereich von 1 bis 10, insbesondere 1.5 bis 7. Eine solche Zusammensetzung ist besonders elastisch.

Die härtbare Zusammensetzung eignet sich für eine Vielzahl von Anwendungen. Sie ist besonders geeignet als Klebstoff, Dichtstoff, Beschichtung, Giessharz oder Spachtelmasse, insbesondere als elastischer Klebstoff, elastischer Dichtstoff oder elastische Beschichtung.

Für die Anwendung werden die Inhaltsstoffe oder Komponenten der härtbaren Zusammensetzung miteinander vermischt und die vermischte Zusammensetzung wird im flüssigen Zustand auf mindestens ein Substrat appliziert.

Geeignete Substrate sind insbesondere:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC);
- Isoliermaterialen, insbesondere Schäume, insbesondere aus EPS, XPS, PUR, PIR, Aerogel oder geschäumtes Glas (Foamglas), oder Fasern aus Steinwolle oder Glaswolle,
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Aus der Anwendung der härtbaren Zusammensetzung wird ein Artikel erhalten. Der Artikel ist insbesondere mit der härtbaren Zusammensetzung verklebt, abgedichtet oder beschichtet. Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut sein, insbesondere ein Fenster, ein Rohr, ein Rotorblatt einer Windkraftanlage, ein Haushaltsgerät oder ein Verkehrsmittel wie insbesondere ein Automobil, ein Bus, ein Lastkraftwagen, ein Schienenfahrzeug, ein Schiff, ein Flugzeug oder ein Helikopter oder ein Anbauteil davon.

### Beschreibung der Bilder:

- **Figur 1**: zeigt den Kurvenverlauf der Zugspannung gegen Dehnung der Zusammensetzungen **Z-1 (Ref.), Z-2, Z-3** und **Z-5.**

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Merck.

Die **Viskosität** wurde jeweils auf einem thermostatisierten Kegel-Platten-Viskosimeter Rheotec RC30 (Kegeldurchmesser 25 mm, Kegelwinkel 1°, Kegelspitze-Platten-Abstand 0.05 mm, Scherrate 25 s⁻¹) gemessen.

### Herstellung von Polymeren mit Acetoacetatgruppen:

### Polymer B1:

1173 g (1 mol OH) Polybutadienpolyol (Poly bd^{®} R45 HTLO, OH-Zahl 47 mg KOH/g, mittleres Molekulargewicht Mₙ 2'800 g/mol, mittlere OH-Funktionalität 2.5, von Resin Solutions) wurde mit 141 g (1.1 mol) Ethylacetoacetat und 1.2 g Tetra-n-butyltitanat (Tyzor^{®} TnBT, von Dorf Ketal) versetzt und unter Vakuum und Entfernung der flüchtigen Bestandteile bei einer Temperatur von 80 bis 140 °C umgesetzt. Erhalten wurden 1'252 g einer klaren, gelblichen Flüssigkeit mit einer Viskosität bei 20 °C von 8.99 Pa·s und einem theoretischen Acetoacetat-Equivalentgewicht von 1'275 g/eq.

### Polymer P1:

840 g (3.5 mol OH) Rizinusöl-basiertes Polyol (Setathane^{®} D 1145, OH-Zahl 234 mg KOH/g, von Allnex) wurde mit 501 g (3.85 mol) Ethylacetoacetat und 1.3 g Tetra-n-butyltitanat (Tyzor^{®} TnBT, von Dorf Ketal) versetzt und unter Vakuum und Entfernung der flüchtigen Bestandteile bei einer Temperatur von 80 bis 140 °C umgesetzt. Erhalten wurden 1'086 g einer klaren, farblosen Flüssigkeit mit einer Viskosität bei 20 °C von 1.06 Pa·s und einem theoretischen Acetoacetat-Equivalentgewicht von 324 g/eq.

### Polymer R1:

500 g (0.5 mol OH) Polyoxypropylendiol (Voranol ^{®} 2000 L, OH-Zahl 56 mg KOH/g, von Dow) wurde mit 71.6 g (0.55 mol) Ethylacetoacetat und 0.8 g Tetra-n-butyltitanat (Tyzor^{®} TnBT, von Dorf Ketal) versetzt und unter Vakuum und Entfernung der flüchtigen Bestandteile bei einer Temperatur von 80 bis 140 °C umgesetzt. Erhalten wurde eine klare, leicht gelbliche Flüssigkeit mit einer Viskosität bei 20 °C von 0.47 Pa·s und einem theoretischen Acetoacetat-Equivalentgewicht von 1084 g/eq.

### Polymer R2:

800 g (0.5 mol OH) Polyoxypropylentriol (Voranol^{®} CP 4755, OH-Zahl 35 mg KOH/g, OH-Funktionalität ca. 2.4, von Dow), wurde mit 71.6 g (0.55 mol) Ethylacetoacetat und 1.0 g Tetra-n-butyltitanat (Tyzor^{®} TnBT, von Dorf Ketal) versetzt und unter Vakuum und Entfernung der flüchtigen Bestandteile bei einer Temperatur von 80 bis 140 °C umgesetzt. Erhalten wurde eine klare, leicht gelbliche Flüssigkeit mit einer Viskosität bei 20 °C von 1.19 Pa·s und einem theoretischen Acetoacetat-Equivalentgewicht von 1687 g/eq.

### Herstellung von Aldiminen:

### Aldimin-1:

212.2 g (2 mol) Benzaldehyd wurde unter Stickstoffatmosphäre vorgelegt, unter gutem Rühren und Kühlung mit 158.3 g (1 mol) 2,2(4),4-Trimethyl-1,6-hexandiamin (Vestamin^{®} TMD, von Evonik) versetzt und anschliessend die flüchtigen Bestandteile bei 90 °C und 10 mbar Vakuum entfernt. Erhalten wurde N,N'-Dibenzyliden-2,2(4),4-trimethyl-1,6-hexandiamin als klare, gelbliche Flüssigkeit mit einem theoretischen Aldimin-Equivalentgewicht von 170 g/eq.

### Herstellung von härtbaren Zusammensetzungen:

### Zusammensetzungen Z-1 bis Z-7:

Für jede Zusammensetzung wurden die in den Tabellen 1 und 2 angegebenen Inhaltsstoffe der Komponente **K1** in den angegebenen Mengen (in Gewichtsteilen) vermischt und in einem verschlossenen Gebinde aufbewahrt.

Als Komponente **K2** wurde die in den Tabellen 1 und 2 angegebene Menge (in Gewichtsteilen) Aldimin-1 eingesetzt.

Anschliessend wurden die Komponenten **K1** und **K2** jeder Zusammensetzung mittels eines Zentrifugalmischers (Thinky ARE-250, 2000 U/min, 60 s) vermischt und wie folgt beschrieben geprüft.

Die **Gelierzeit** (Zeitspanne zwischen dem Vermischen der Komponenten und der Gelierung) wurde bestimmt, indem 10 g der vermischten Zusammensetzung mittels eines Spatels in regelmässigen Zeitabständen bewegt wurden, bis die Masse gelierte.

Zur Bestimmung der mechanischen Eigenschaften wurde die vermischte Zusammensetzung auf eine PTFE-beschichtete Folie zu einem Film von 2 mm Dicke ausgegossen, dieser durch Lagerung während 7 Tagen im Normklima ausgehärtet, einige hantelförmige Prüfkörper (Länge 75 mm, Steglänge 30 mm, Stegbreite 4 mm) aus dem Film gestanzt und diese gemäss DIN EN 53504 bei einer Zuggeschwindigkeit von 200 mm/min auf **Zugfestigkeit, Bruchdehnung, E-Modul 5 %** (zwischen 0.5-5 % Dehnung) und **E-Modul 50** % (zwischen 0.5-50 % Dehnung) geprüft. Weiter wurden einige Prüfkörper zur Bestimmung des **Weiterreisswiderstandes** aus dem Film von 2 mm Dicke ausgestanzt und gemäss DIN ISO 34-1, Verfahren B (winkelförmiger Prüfkörper) bei einer Zuggeschwindigkeit von 500 mm/min geprüft. Diese Resultate sind mit **"7d NK"** gekennzeichnet.

Weitere Prüfkörper zur Bestimmung von Zugfestigkeit, Bruchdehnung, E-Modul 5 % und E-Modul 50 % wurden anschliessend an die Aushärtung während 7 Tagen im Normklima während 7 Tagen bei 70 °C und 100 % relative Luftfeuchtigkeit gelagert, gefolgt von weiteren 7 Tagen im Normklima, und erst dann geprüft. Diese Resultate sind mit ***"7d 70*/*100 + 7d NK"*** gekennzeichnet.

Die **Shore** Härte wurde gemäss DIN 53505 an zylindrischen Prüfkörpern (Durchmesser 20 mm, Dicke 5 mm) geprüft. Entweder nach einer Lagerzeit von 7 Tagen im Normklima **(7d NK),** oder nach 7 Tagen im Normklima gefolgt von 7 Tagen bei 80 °C gefolgt von 1 Tag im Normklima **(+7d 80°C).**

Als Mass für die Elastizität wurde als **"Elastizität M5/M50"** das Verhältnis zwischen dem **E-Modul 5** % und dem **E-Modul 50 %** nach 7 Tagen Aushärtung im Normklima angegeben. Je näher der Wert bei 1 liegt, umso elastischer verhalten sich die Prüfkörper, bzw. umso linearer ist der Verlauf der Zugspannung-Dehnungskurve.

Die Resultate sind in den Tabellen 1 und 2 angegeben.

Die mit "(**Ref.**)" bezeichneten Zusammensetzungen sind Vergleichsbeispiele.

**Tabelle 1: Zusammensetzung und Eigenschaften von Z-1 bis Z-5.**

| **Zusammensetzung** | | **Z-1 (Ref.)** | **Z-2** | **Z-3** | **Z-4** | **Z-5** |
|---|---|---|---|---|---|---|
| **Komponente K1:** | | | | | | |
| Polymer **B1** | | - | 15.0 | 30.0 | 33.3 | 50.0 |
| Polymer **P1** | | 100.0 | 85.0 | 70.0 | 66.7 | 50.0 |

| **Komponente K2:** | | | | | | |
|---|---|---|---|---|---|---|
| Aldimin-**1** | | 19.7 | 17.6 | 15.4 | 14.9 | 12.5 |
| Gelierzeit [h:min] | | 3:00 | 3:00 | 3:00 | 3:00 | 3:00 |

| ***7d NK:*** | | | | | | |
|---|---|---|---|---|---|---|
| Zugfestigkeit [MPa] | | 14.3 | 11.8 | 8.6 | 6.6 | 3.0 |
| Bruchdehnung [%] | | 94 | 109 | 113 | 111 | 83 |
| E-Modul 5 % [MPa] | | 144 | 42.0 | 24.4 | 21.4 | 10.8 |
| E-Modul 50 % [MPa] | | 9.8 | 7.1 | 5.8 | 5.2 | 3.8 |
| Weiterreisswiderstand [N/mm] | | 53.0 | 24.6 | 16.9 | 16.4 | 9.5 |

| ***7d 70*/*100 + 7d NK:*** | | | | | | |
|---|---|---|---|---|---|---|
| Zugfestigkeit [MPa] | | 13.3 | 12.3 | 7.9 | 7.2 | 2.8 |
| Bruchdehnung [%] | | 74 | 104 | 98 | 98 | 74 |
| E-Modul 5% [MPa] | | 122 | 39.6 | 29.2 | 19.5 | 8.7 |
| E-Modul 50 % [MPa] | | 11.6 | 8.2 | 7.0 | 6.0 | 3.7 |
| Shore A | (7d NK) | 95 | 83 | 79 | 76 | 67 |
| | (+7d 80°C) | 88 | 78 | 78 | 67 | 62 |
| Elastizität M5/M50 | | 14.7 | 5.9 | 4.2 | 4.1 | 2.8 |

Aus der Tabelle 1 ist ersichtlich, dass die Mitverwendung des Polymers **B1** (Polybutadienpolymer) eine Elastifizierung (tiefer Wert für das E-Modul 5 % bzw. ein Verhältnis zwischen E-Modul 5 % und E-Modul 50 % näher bei 1) bewirkte, bei immer noch hoher Festigkeit, ohne dabei Einfluss auf das Aushärtungsverhalten gemessen an der Gelierzeit zu haben.

**Figur 1** zeigt die Zugspannungs-Dehnungs-Diagramme der ausgehärteten Zusammensetzungen **Z-1 (Ref.), Z-2, Z-3,** und **Z-5,** wobei bei steigendem Anteil an Polymer **B1** der Kurvenverlauf zunehmend linearer wird.

**Tabelle 2: Zusammensetzung und Eigenschaften von Z-3, Z-6 und Z-7.**

| **Zusammensetzung** | | **Z-3** | **Z-6 (Ref.)** | **Z-7 (Ref.)** |
|---|---|---|---|---|
| **Komponente K1:** | | | | |
| | Polymer **B1** | 30.0 | - | - |
| | Polymer **P1** | 70.0 | 70.0 | 70.0 |
| | Polymer **R1** | - | 30.0 | - |
| | Polymer **R2** | - | - | 30.0 |

| **Komponente K2:** | | | | |
|---|---|---|---|---|
| | Aldimin-**1** | 15.4 | 15.7 | 15.0 |
| Gelierzeit [h:min] | | 3:00 | 8:00 | 8:00 |

| ***7d NK:*** | | | | |
|---|---|---|---|---|
| Zugfestigkeit [MPa] | | 8.6 | 2.5 | 1.3 |
| Bruchdehnung [%] | | 113 | 85 | 64 |
| E-Modul 5 % [MPa] | | 24.4 | 3.2 | 2.4 |
| E-Modul 50 % [MPa] | | 5.8 | 2.4 | 1.9 |
| Weiterreisswiderstand [N/mm] | | 16.9 | 3.6 | 3.0 |

| ***7d 70*/*100 + 7d NK:*** | | | | |
|---|---|---|---|---|
| Zugfestigkeit [MPa] | | 7.9 | 1.9 | nicht bestimmt |
| Bruchdehnung [%] | | 98 | 64 | |
| E-Modul 5 % [MPa] | | 29.2 | 3.4 | |
| E-Modul 50 % [MPa] | | 7.0 | 2.7 | |
| Shore A | (7d NK) | 79 | 55 | 50 |
| | (+7d 80°C) | 78 | 55 | 58 |

Aus Tabelle 2 ist ersichtlich, dass das Polymer **B1** (Polybutadienpolymer) in der Zusammensetzung **Z-3** eine höhere Dehnbarkeit, eine deutlich höhere Festigkeit, Härte und Weiterreissfestigkeit und eine bessere Hydrolysebeständigkeit ermöglichte im Vergleich zu entsprechenden Zusammensetzungen **Z-6 (Ref.)** bzw. **Z-7 (Ref.)** mit den Polymeren **R1** bzw. **R2** (Polyetherpolymere), wobei die Polymere **R1** bzw. **R2** zusätzlich einen stark verzögernden Einfluss auf die Aushärtegeschwindigkeit gemessen an der Gelierzeit bewirkten.

## Patentansprüche

1. Verwendung eines Polybutadienpolymers **B** mit Ketoestergruppen der Formel (I) zum Elastifizieren einer härtbaren Zusammensetzung enthaltend Ketoestergruppen der Formel (I) und aromatische Aldimingruppen, 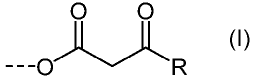 wobei R für einen einwertigen Kohlenwasserstoffrest mit 1 bis 6 C-Atomen steht.

2. Verwendung gemäss Anspruch 1, **dadurch gekennzeichnet, dass** das Polybutadienpolymer **B** ein mittleres Molekulargewicht Mₙ von 1'000 bis 6'000 g/mol, bevorzugt 2'000 bis 4'000 g/mol, hat.

3. Verwendung gemäss Anspruch 1 oder 2, **dadurch gekennzeichnet, dass** das Polybutadienpolymer **B** eine mittlere Ketoester-Funktionalität von 2 bis 3 hat.

4. Verwendung gemäss einem der Ansprüche 1 bis 3, **dadurch gekennzeichnet, dass** R für Methyl steht und die Ketoestergruppen der Formel (I) somit Acetoacetatgruppen sind.

5. Verwendung gemäss einem der Ansprüche 1 bis 4, **dadurch gekennzeichnet, dass** die härtbare Zusammensetzung zusätzlich zum Polybutadienpolymer **B** mindestens ein Polymer **P** mit Ketoestergruppen der Formel (I) ausgewählt aus Polyesterpolymeren mit Ketoestergruppen der Formel (I), Polyacrylatpolymeren mit Ketoestergruppen der Formel (I) und Rizinusöl-basierten Polymeren mit Ketoestergruppen der Formel (I) enthält.

6. Verwendung gemäss Anspruch 5, **dadurch gekennzeichnet, dass** als Polymer **P** mindestens ein Rizinusöl-basiertes Polymer mit einem Ketoester-Equivalentgewicht von 300 bis 500 g/eq vorhanden ist.

7. Verwendung gemäss Anspruch 5 oder 6, **dadurch gekennzeichnet, dass** das Gewichtsverhältnis zwischen dem Polybutadienpolymer **B** und dem Polymer **P** in der härtbaren Zusammensetzung im Bereich von 1/99 bis 60/40, bevorzugt 5/95 bis 50/50, insbesondere 10/90 bis 40/60, liegt.

8. Verwendung gemäss einem der Ansprüche 1 bis 7, **dadurch gekennzeichnet, dass** die härtbare Zusammensetzung mindestens ein Aldimin **L** mit mindestens zwei Aldimingruppen der Formel (II) enthält, 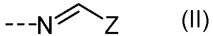 wobei Z für einen aromatischen oder heteroaromatischen fünf- oder sechsgliedrigen Ring steht, der gegebenenfalls substituiert und/oder anelliert ist und insgesamt 4 bis 25 C-Atome umfasst.

9. Verwendung gemäss Anspruch 8, **dadurch gekennzeichnet, dass** das Aldimin **L** ein Aldimin-Equivalentgewicht von 110 bis 350 g/eq hat.

10. Verwendung gemäss Anspruch 8 oder 9, **dadurch gekennzeichnet, dass** das Aldimin **L** ausgewählt ist aus der Liste bestehend aus N,N'-Dibenzyliden-1,5-pentandiamin, N,N'-Dibenzyliden-1,6-hexandiamin, N,N'-Dibenzyliden-2-methyl-1,5-pentandiamin, N,N'-Dibenzyliden-2,2(4),4-trimethyl-1,6-hexandiamin, N,N'-Dibenzylidenpolyoxypropylendiaminen mit mittlerem Molekulargewicht Mₙ von 350 bis 750 g/mol, und entsprechenden Verbindungen abgeleitet von 4-Tolualdehyd, 4-Isopropylbenzaldehyd, Furfural oder 5-Methylfurfural anstelle von Benzaldehyd.

11. Verwendung gemäss einem der Ansprüche 1 bis 10, **dadurch gekennzeichnet, dass** das Verhältnis der Anzahl Ketoestergruppen der Formel (I) zur Anzahl aromatische Aldimingruppen insgesamt im Bereich von 1 bis 4, bevorzugt 1.5 bis 3.5, insbesondere 2 bis 3, liegt.

12. Härtbare Zusammensetzung, erhalten aus der Verwendung gemäss einem der Ansprüche 1 bis 11.

13. Härtbare Zusammensetzung gemäss Anspruch 12, **dadurch gekennzeichnet, dass** die Zusammensetzung eine Komponente **K1** und eine Komponente **K2** umfasst, welche voneinander getrennt hergestellt und verpackt sind, wobei Verbindungen mit Ketoestergruppen der Formel (I) Bestandteil der Komponente **K1** und Verbindungen mit aromatischen Aldimingruppen Bestandteil der Komponente **K2** sind.

14. Ausgehärtete Zusammensetzung, erhalten aus der Verwendung gemäss einem der Ansprüche 1 bis 11 oder der härtbaren Zusammensetzung gemäss Anspruch 12 oder 13 nach dem Vermischen der Inhaltsstoffe oder Komponenten und anschliessendem Aushärten durch chemische Reaktion.

15. Ausgehärtete Zusammensetzung gemäss Anspruch 14, **dadurch gekennzeichnet, dass** das Verhältnis zwischen dem E-Modul bei 0.5 bis 5 % Dehnung und dem E-Modul bei 0.5 bis 50 % Dehnung, bestimmt gemäss DIN EN 53504 an hantelförmigen Prüfkörpern (Länge 75 mm, Steglänge 30 mm, Stegbreite 4 mm, Dicke 2 mm) mit einer Zuggeschwindigkeit von 200 mm/min, im Bereich von 1 bis 10, insbesondere 1.5 bis 7, liegt.
